# EUROPEAN PATENT APPLICATION

(11) **EP 4 361 579 A1**
(43) Date of publication of application: **01.05.2024**
(21) Application number: 22204499.2
(22) Date of filing: 28.10.2022
(51) Int. Cl.: G01F 23/284, B01D 15/10, G01S 13/88

(54) **A SENSOR ARRANGEMENT**

(71) Applicant: Biotage AB, 751 03 Uppsala (SE)
(72) Inventor: FRÖJDH, Håkan, 756 45 UPPSALA (SE); FORSLUND, David, 755 98 UPPSALA (SE); JOHANSSON, Elias, 754 24 UPPSALA (SE)
(74) Representative: Brann AB

(57) **Abstract**

A method for detecting a position of a liquid surface in a container and a sensor arrangement 1; 1' configured to be attached to a top opening 11; 11' of a container 13; 13' used for storing liquid in a bench top fluid handling system 101. Said sensor arrangement 1; 1' comprises a mmWave radar sensor 21, a sensor housing 24 comprising said radar sensor 21 and a container attaching part 23; 23' connected to said sensor housing 24 and configured for attaching the sensor arrangement 1; 1' to the top opening 11; 11' of the container 13; 13' such that the radar sensor 21 can be provided in an operating position for detecting a position of a liquid surface in the container 13; 13'.

## Description

### TECHNICAL FIELD OF THE INVENTION

The present invention relates to a sensor arrangement for detecting a position of a liquid surface in a container and to a method for detecting a position of a liquid surface in a container used for storing liquid in a bench top fluid handling system.

### BACKGROUND

In fluid handling systems, such as for example liquid analyzing systems, separation systems and chromatography systems, it is important to keep track of content in bottles and other containers for different liquids such as solvent and waste handled in the system. If a container run empty the process is disturbed and if a container is overfilled liquid may be wasted and there may be problems with contamination. Overflow of a liquid may also be a safety problem with risk of personal injury. There are different commonly used methods for monitoring liquid levels in containers in these types of systems. One possibility is to use dead reckoning, i.e. information from the pumps in the system about how much liquid is pumped to and from the containers. However, with such a system it is important that the user always correctly updates content in the container when they are refilled or emptied.

Another method for monitoring liquid levels in chromatography systems is disclosed in US7419598 where a bubbler is positioned within a solvent reservoir with its opening near the bottom of the system to measure the pressure of solvent and hereby monitor the level of the solvent. This measuring method is however dependent on density of the liquid and it will often not provide good enough measuring precision to predict if the amount of solvent is enough for the method run or if the remaining empty volume in a waste container is enough for a method run.

In US2003/0175157 a method for fluid content control in a container is disclosed where a weight scale is used for detecting the weight of the fluid in a container. Also in this method a density of the fluid needs to be known or estimated whereby the measuring precision may not be exact, especially for mixed fluids such as in waste containers. Furthermore, weight of the container, weight of tubing provided to the container and any possible other parts of the system coming into contact with the container will affect the measured weight of the container and hereby affect measuring precision. Hereby also the containers need to be positioned free, without contacting anything which may be problematic.

### SUMMARY

An object of the present invention is to provide an improved sensor arrangement and method for monitoring liquid level in containers.

A further object of the invention is to provide a sensor arrangement which is easily handled and by which a liquid level can be reliably monitored.

This is achieved in a sensor arrangement and by a method according to the independent claims.

According to one aspect of the invention a sensor arrangement configured to be attached to a top opening of a container used for storing liquid in a bench top fluid handling system is provided. Said sensor arrangement comprises:
- a mmWave radar sensor;
- a sensor housing comprising said mmWave radar sensor; and
- a container attaching part connected to said sensor housing and configured for attaching the sensor arrangement to the top opening of the container such that the mmWave radar sensor can be provided in an operating position for detecting a position of a liquid surface in the container.

According to another aspect of the invention a method for detecting a position of a liquid surface in a container used for storing liquid in a bench top fluid handling system is provided. Said method comprises the steps of:
- attaching a container attaching part of a sensor arrangement according to the invention to a top opening of the container; and
- detecting the position of the liquid surface in the container when the mmWave radar sensor is in the operating position.

Hereby a reliable monitoring of liquid level in containers is achieved which measures a distance to the liquid level directly and hereby measures liquid levels for all types of liquids and mixed liquids independently of their densities. According to the invention a mmWave radar sensor is used. This is a type of radar technology that transmits signals with a short wavelength in the millimeter range. With a short wavelength the size of system components can be smaller whereby a small and compact radar sensor has been provided which also measures with high accuracy. The radar sensor may for example operate at 55-85 GHz. This type of radar sensor can measure closer distances than previous types of radar sensors which also were larger and bulkier and not suitable for smaller sized containers. According to the invention such a mmWave radar sensor is attached to a top opening of a container whereby liquid level in the container can be monitored. This is a direct measuring of the liquid level which is independent of a density of the liquid, whereby a measuring precision and reliability is good both for clean liquids and for mixed liquids, such as in waste containers. Hereby it can efficiently be avoided both to run empty and overfilling of liquid in a container. Hereby the fluid handling process in the system is more efficient and the risk for contamination and personal injury by overfilling a waste container is decreased. By positioning the mmWave radar sensor attached to a top opening of the container the radar sensor will be positioned at a suitable distance above the liquid level in the container and the liquid level can be conveniently measured at all times with precision. Hereby the user knows at all times how much liquid there is in the container and hereby the user can easily see if the liquid will be enough for the process to be run. Furthermore, the user never needs to manually input any information about liquid volume whereby handling is facilitated for the user and the risk for mistakes is decreased.

According to one embodiment of the invention said sensor housing can be provided in at least two different positions in relation to the container attaching part, wherein one of the positions is a closed position where the sensor housing covers at least a part of the top opening of the container and another position is an open position in which the sensor housing is not covering the top opening, wherein the radar sensor is provided in the operating position when the sensor housing is provided in the closed position. Hereby the container can be refilled with new liquid without removing the whole sensor arrangement, only the sensor housing needs to be provided in the open position during refilling.

According to one embodiment of the invention said sensor housing is connected in the sensor arrangement by a hinge, whereby the sensor housing can be flipped up from the closed position to the open position for enabling access to the top opening of the container.

According to one embodiment of the invention the sensor housing comprises an angle sensor. Hereby a tilt angle for the sensor housing and/or for the whole container can be detected. A tilt angle of the sensor housing can indicate if the sensor housing is in closed or open position. A tilt angle for the whole container may indicate that the container has been positioned wrongly or that the user is tilting the container by purpose for using the last part of the content.

According to one embodiment of the invention the sensor arrangement further comprises a position indicating device configured to indicate if the radar sensor is in the operating position. This position indicating device is in one embodiment the angle sensor.

According to one embodiment of the invention the sensor arrangement further comprises a tube holder part which can be attached to the container attaching part and is configured for holding tubes to be provided into the container towards one side of the top opening. Hereby the tubes can be kept out of the way from a measuring passage between the radar sensor and the liquid level. The tubes may otherwise be in the way and disturb the liquid level detecting.

According to one embodiment of the invention the tube holder part comprises a rail which extends from the top opening of the container both into the container and out from the container when the sensor arrangement is provided to the container, said rail can support one or more tubes which are provided to the container. Hereby tubes are held in a suitable position in the container. The tubes can also be directed out from the container in a suitable direction. Hereby connection in a system is facilitated. The tubes can also be positioned and kept at a suitable height within the container. Herbey there is no risk that the tubes are moved inside the container to a position above the liquid level.

According to one embodiment of the invention the tube holder part further comprises a ring-shaped securing part connected to the rail, wherein said ring-shaped securing part is provided in between the container attaching part and the sensor housing when the sensor housing is provided in the closed position, whereby the ring-shaped securing part is connected to the container attaching part such that it can rotate in relation to the container attaching part and connected to the sensor housing such that the housing part can be provided in at least two different positions in relation to the container attaching part, wherein said two positions comprise the open position and the closed position. By rotating the ring-shaped securing part together with the rail tubes provided to the rail can be directed as wanted in a connected system while the container attaching part is kept in place attached to the container.

According to one embodiment of the invention said sensor arrangement comprises a processor connected to the radar sensor, wherein said processor is configured to determine amount of liquid in said container based on said detected position of the liquid surface and based on prestored container geometry information. By distributing intelligence out to the sensor arrangement, the communication out from the sensor arrangement to an external control system is less complicated and more robust, i.e. requires less capacity and smaller and cheaper cables can be used for that communication.

According to one embodiment of the invention said container attaching part comprises threads for threaded connection to a top opening comprising threads of a container or comprises magnets for magnetic connection to a top opening of a container.

According to one embodiment of the invention the sensor arrangement further comprises a connection device, whereby the radar sensor and possibly a processor and/or an angle sensor can be connected to a control system in the bench top fluid handling system in which said container and sensor arrangement are used.

According to one embodiment of the invention said sensor arrangement is configured to be attached to a container having a height between 10-100 cm and/or a volume between 0,5-20 liter. Hereby the sensor arrangement is suitable for use in a bench top fluid handling system, such as a chromatography system.

According to one embodiment of the invention said method further comprises the step of positioning one or more tubes to be provided into the container into a tube holder part of the sensor arrangement.

According to one embodiment of the invention said method further comprises the step of rotating the tube holder part in relation to the container attaching part such that tubes provided in the tube holder part are directed for convenient connection in the bench top fluid handling system.

According to one embodiment of the invention the method further comprises the step of indicating if the radar sensor is in the operating position by a position indicating device. According to one embodiment of the invention the step of indicating if the radar sensor is in the operating position by the position indicating device comprises measuring a tilt angle of the sensor housing, wherein said position indicating device comprises an angle sensor provided in the sensor housing.

According to one embodiment of the invention the method further comprises the steps of:
- positioning a sensor housing of the sensor arrangement in a closed position in relation to the container attaching part for detecting a liquid level in the container, wherein said closed position is a position where the sensor housing covers at least a part of the top opening of the container, wherein the radar sensor is provided in the operating position when the sensor housing is provided in the closed position;
- positioning the sensor housing of the sensor arrangement in an open position in relation to the container attaching part for refilling liquid into the container, wherein the open position is a position in which the sensor housing is not covering the top opening.

Further embodiments are described in the detailed description and the depending claims.

### BRIEF DESCRIPTION OF THE DRAWINGS

Figure 1 shows schematically a bench top fluid handling system in which a sensor arrangement according to the invention can be used.
Figure 2a shows a sensor arrangement according to one embodiment of the invention in a perspective view.
Figure 2b shows a cross section of the sensor arrangement as shown in Figure 2a.
Figure 3a is a perspective view of a container with the sensor arrangement as shown in Figures 2a and 2b attached and provided in a closed position.
Figure 3b is the same container and the same sensor arrangement as shown in Figure 3a where the sensor arrangement is provided in an open position.
Figure 3c is a cross section of the container with attached sensor arrangement as shown in Figure 3a.
Figure 3d is a close up of the cross section of the sensor arrangement as shown in Figure 3c.
Figure 4a is a perspective view of a sensor arrangement according to another embodiment of the invention.
Figure 4b is a perspective view showing only parts of the sensor arrangement as shown in Figure 4a.
Figure 5a is a perspective view of a container with the sensor arrangement as shown in Figures 4a and 4b attached and provided in a closed position.
Figure 5b is the same container and the same sensor arrangement as shown in Figure 5a where the sensor arrangement is provided in an open position.
Figure 5c is a cross section of the container with attached sensor arrangement as shown in Figure 5a.
Figure 6 is a flow chart of the method according to one embodiment of the invention.

### DETAILED DESCRIPTION OF EMBODIMENTS

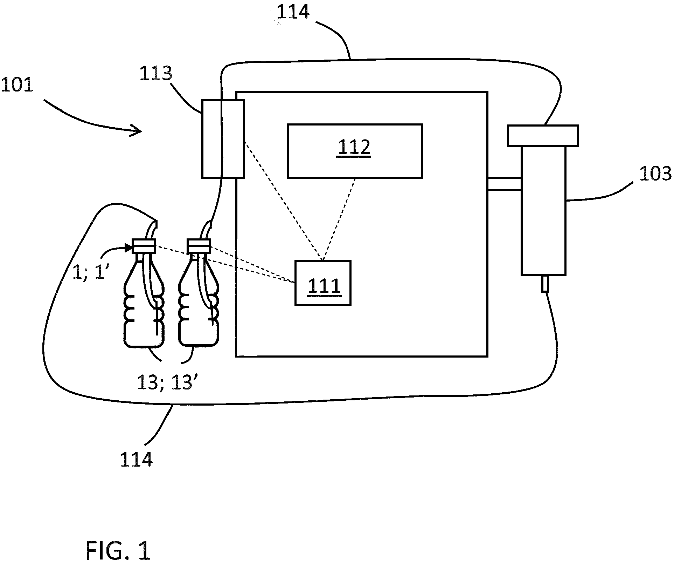

Figure 1 shows schematically a bench top fluid handling system 101 in which a sensor arrangement 1; 1' according to the invention can be used when attached to a container 13; 13' used for storing liquid in the bench top fluid handling system 101. In this specific example the bench top fluid handling system 101 is a chromatography system 101, for example a lab chromatography system, also called a small scale chromatography system, whereby one or more chromatography columns 103 can be connected to the chromatograph system 101. In other types of bench top fluid handling systems in which this invention can be used other types of components for treating or analyzing the fluid instead of chromatography columns can be connected to the system. Other examples of bench top fluid handling systems comprise for example filter systems, evaporation systems and other types of separation systems and analyzing systems. The chromatography system 101 comprises furthermore one or more pumps 113 for pumping liquid to and from the containers 13; 13' and the chromatography columns 103. Fluid lines 114 are connecting the containers 13; 13' with the one or more chromatography columns 103. Furthermore, the chromatography system 101 comprises a control system 111 and possibly a display 112. A display may be suitable for presenting information to a user but may be replaced by other alternatives, such as visible or audible signals, automatic stop and/or connection to a display of a connected device such as a computer or telephone. The control system 111 is connected to the display 112, the one or more pumps 113 and to the one or more sensor arrangements 1; 1'. The control system 111 can collect information from both the one or more sensor arrangements 1; 1' about liquid levels in the containers 13; 13' and possibly also information from the one or more pumps 113 about pumped volume to and from the containers 13; 13'. The control system 111 can furthermore suitably present information about liquid levels on the display 112 and control the one or more pumps 113 in dependence of this information.

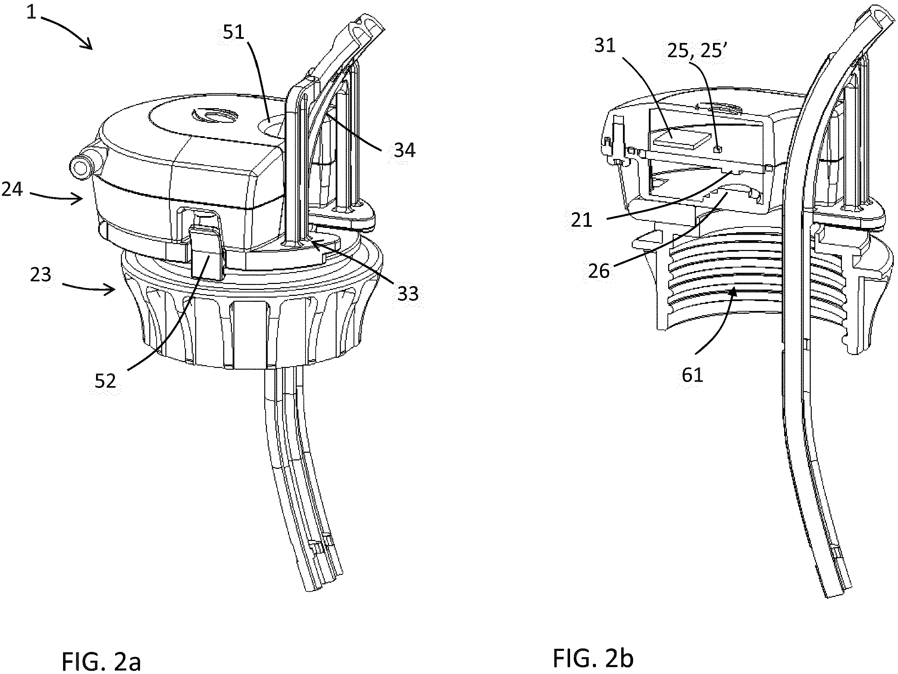

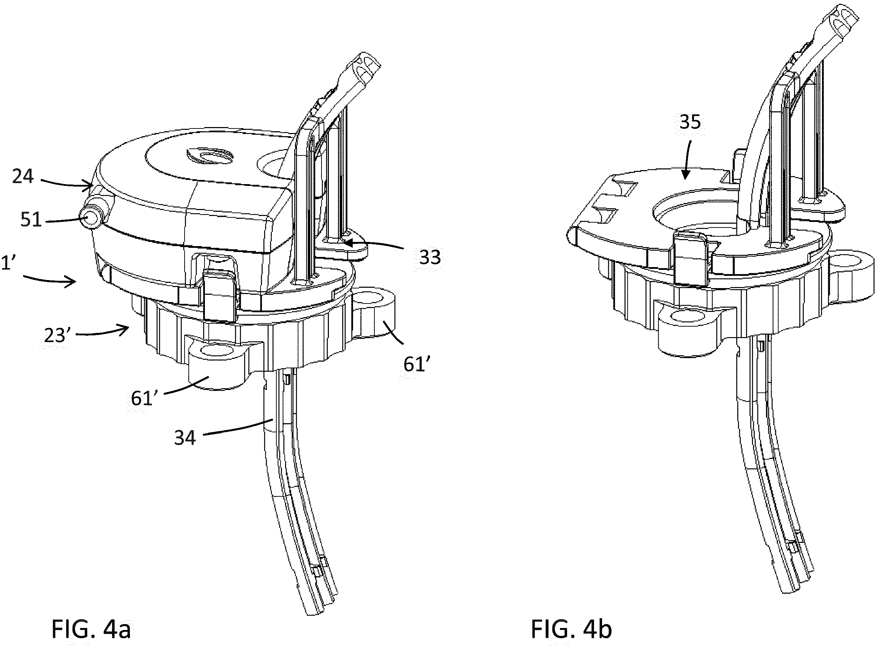

Two different embodiments of a sensor arrangement 1; 1' are shown in Figures 2-5. In Figures 2-3 the sensor arrangement 1 comprises a container attaching part 23 having a threaded connection 61 configured to be attached to a container 13 having a threaded top opening 11. The top opening 11 is positioned in an upper part of the container 13 and may also be called a filling hole or inlet. For containers without a threaded top opening an adapter can be used for providing a threaded top opening suitable for connection with the sensor arrangement according to the invention. Such an adapter comprises a threaded part having threads which are compatible with the threads of the container attaching part of the sensor arrangement according to the invention and should be positioned into an opening of the container. In Figures 4-5 the sensor arrangement 1' comprises a container attaching part 23' comprising magnets 61'. This is hereby a sensor arrangement 1' suitable for connection to a container having a top opening 11' without threading. If the container is a metallic container a magnetic connection may be suitable. Other possible connections may comprise a snap connection, a clamp connection or a screw connection. Most of the other details of the sensor arrangements 1; 1' are the same and therefore the same or similar reference numbers are given the details in the two different embodiments and the invention will be described below with reference to all the drawings.

According to the invention a sensor arrangement 1; 1' is provided which is configured to be attached to a top opening 11; 11' of a container 13; 13' used for storing liquid in a bench top fluid handling system 101. The sensor arrangement 1; 1' comprises a mmWave radar sensor 21 which is a small and compact new type of radar sensor which can be used for measuring rather small distances compared to prior, larger radar sensors. A mmWave radar sensor is a type of radar technology that transmit signals with a short wavelength in the millimeter range. With a short wavelength the size of system components can be smaller whereby a small and compact radar sensor has been provided which also can measure with high accuracy. The radar sensor may for example operate at 55-85 GHz. The mmWave radar sensor can for example be a pulsed coherent radar sensor, for example operating at 60 GHz, or 55-80 GHz, or 55-65 GHz or it can be another type of mmWave radar sensor, also called a miniaturized radar sensor. Previous types of radar sensors were larger and bulkier and not suitable to use for smaller sized containers. A mmWave radar sensor can be provided as a single chip solution comprising all necessary components in one chip whereby it is a small and compact and easily integrated radar sensor suitable for this invention. According to this invention it has been realized that this type of mmWave radar sensor can be used for containers of smaller sizes, for example having a height in a range between 10-100 cm and/or a volume in the range of 0,5-220 liters or 0,5-20 liters in a bench top fluid handling system for monitoring liquid levels reliably and with high precision. According to the invention the mmWave radar sensor 21, also called only radar sensor 21 hereafter, is provided in a sensor arrangement 1; 1' which is configured to be attached to a top opening 11; 11' of the container 13; 13' whereby a convenient and reliable monitoring of liquid levels is achieved.

The sensor arrangement 1; 1' comprises a sensor housing 24 comprising said radar sensor 21 and a container attaching part 23; 23' connected to the sensor housing 24 and configured for attaching the sensor arrangement 1; 1' to the container 13; 13' such that the radar sensor 21 can be provided in an operating position for detecting a position of a liquid surface in the container 13; 13'. As discussed above the container attaching part 23; 23' may comprise different types of connection means depending on which type of container to be attached to, such as threading 61 for a container 13 having a threaded top opening 11 or magnets 61' for a metallic container.

According to some embodiments of the invention and as shown in both the embodiments of Figures 2-5, the sensor arrangement 1; 1' further comprises a position indicating device 25 configured to indicate if the radar sensor 21 is in the operating position. By detecting a correct position of the radar sensor 21, i.e. if the radar sensor 21 is positioned in a correct operating position or not, a monitoring of liquid level in the container can be made more reliable. If for example the sensor arrangement 1; 1' is moved or removed for refilling of the container 13 the radar sensor 21 will not be able to correctly read a liquid level during this time and it would be beneficial to identify those periods when the radar sensor 21 is not in a correct operating position. In order to be able to keep a process going on during for example refilling of liquid into the container, dead reckoning can be used for estimating liquid levels in the container during times when the radar sensor 21 is not positioned in a correct operating position, i.e. information from the one or more pumps 113 in the system 101 can be used during such periods. However, directly when a correct operating position is indicated again by the position indicating device 25 the liquid level can be updated by readings from the radar sensor. A position indicating device 25 can for example comprise an angle sensor 25' or another type of sensor which can detect the position of the radar sensor 21 or a position of the sensor housing 24 comprising said radar sensor 21 which will be discussed in more details below.

In some embodiments of the invention, and as shown in both embodiments of Figures 2-5, the sensor housing 24 can be provided in at least two different positions in relation to the container attaching part 23; 23', wherein one of the positions is a closed position in which the sensor housing 24 is covering at least a part of the top opening 11; 11' of the container 13; 13' and another position is an open position in which the sensor housing 24 is not covering the top opening 11; 11'. The radar sensor 21 is provided in the operating position when the sensor housing 24 is provided in the closed position. When the sensor housing 24 is provided in the open position the top opening 11; 11', or at least a part of the top opening 11; 11' is revealed, i.e. access is enabled to the container and the container can be filled and/or refilled with a liquid. Hereby the container can be refilled without removing the whole sensor arrangement 1; 1'. Only the sensor housing 24 needs to be provided in the open position. Hereby tubes 41 provided into the container 13; 13' can be kept in the container during refilling of the container.

The sensor housing 24 is a housing enclosing the radar sensor 21 and other components provided in the sensor housing, such a suitably a lens 26 provided for focusing the electromagnetic waves from the radar sensor. This could for example be a hyperbolic lens or an FZP (Fresnel Zone Plate) lens. Furthermore, the sensor housing 24 may comprise a processor 31 connected to the radar sensor 21 and possibly also an angle sensor 25' which will be described in more details below. The material of the sensor housing 24 should be a material through which the radar sensor 21 can transmit and receive the electromagnetic waves, such as for example a plastic material. Suitably the material is also resistant towards chemical vapors which may come from the content in the container. Examples of suitable materials for the sensor housing are PEEK (Polyether Ether Katone), PPS (Polyphenylene Sulfide) and PP (PolyPropylene).

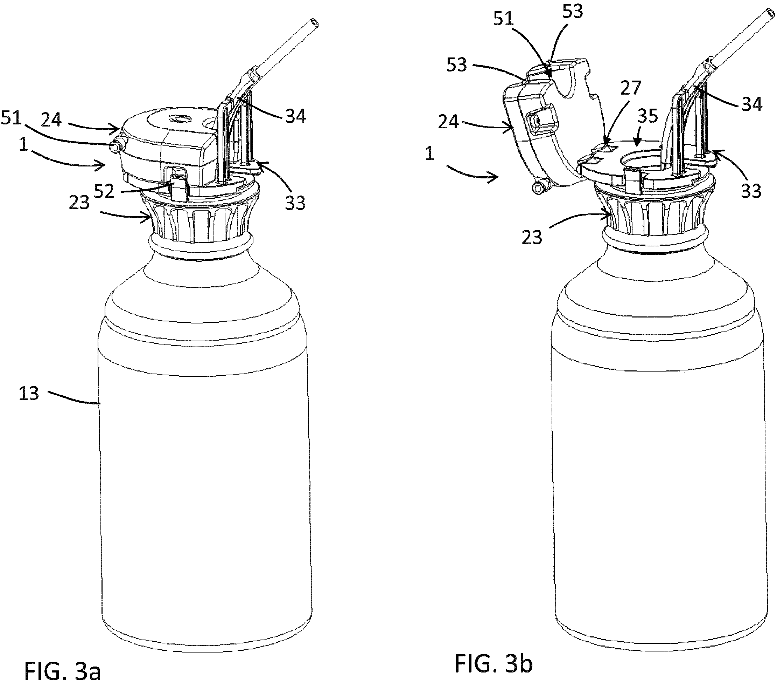

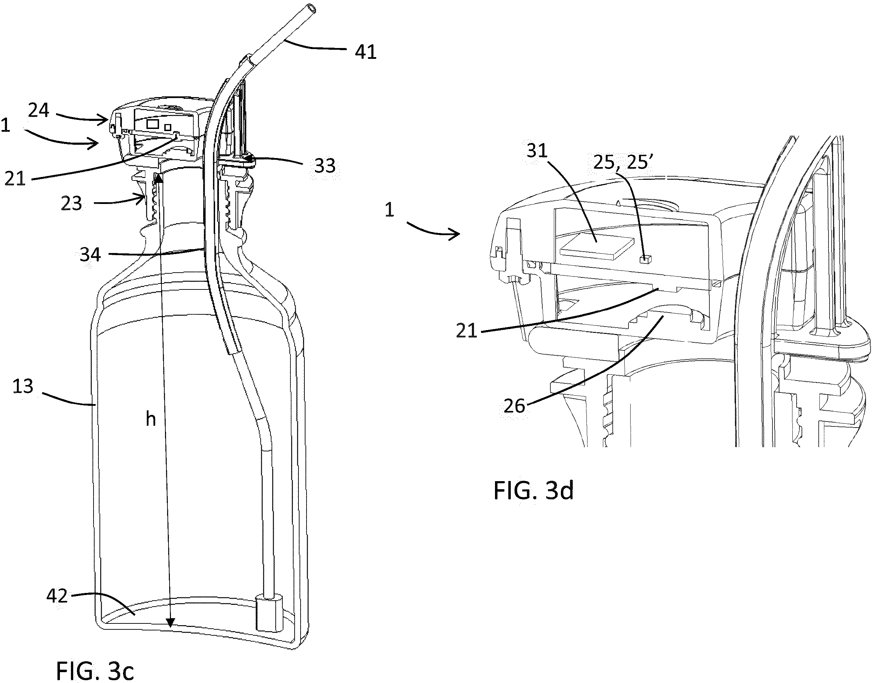

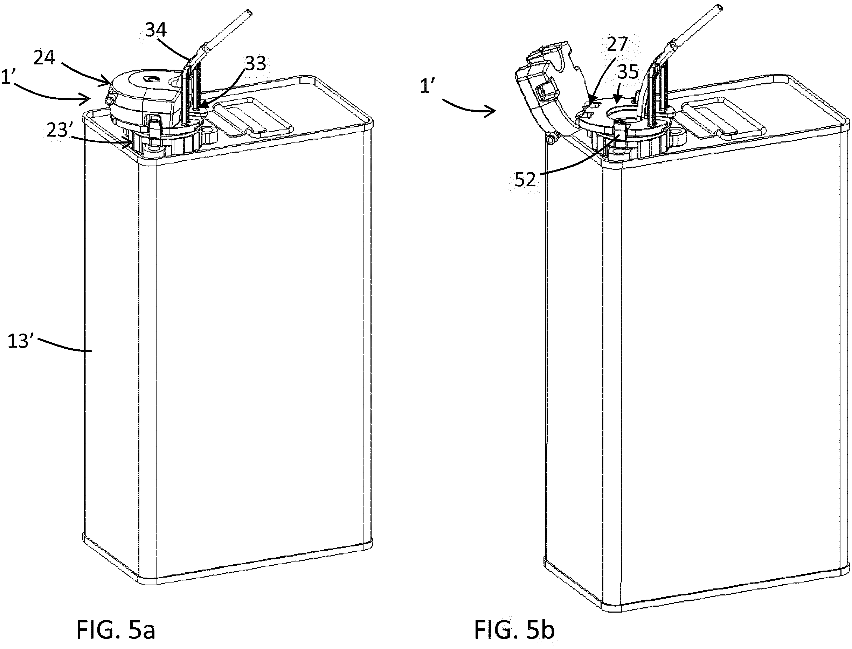

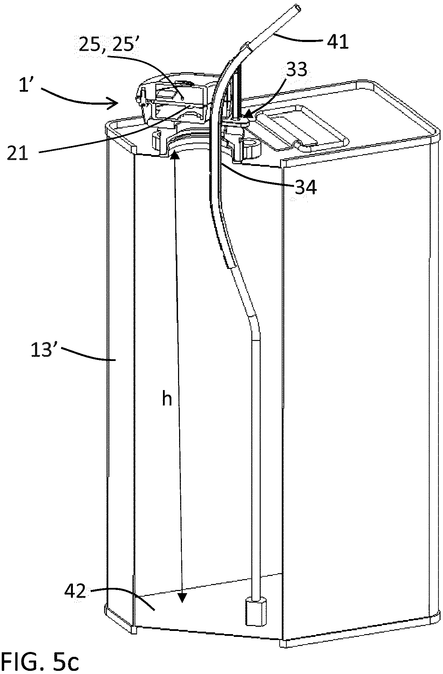

The sensor housing 24 is in some embodiments of the invention (and as shown in both the embodiments in Figures 2-5) connected in the sensor arrangement 1; 1' by a hinge 27, whereby the sensor housing 24 can be flipped up from the closed position to the open position for enabling access to the top opening 11; 11' of the container 13; 13'. Another example for connection of the sensor housing 24 in the sensor arrangement 1; 1' can be a swing-out connection or a magnetic connection. In some embodiments the sensor arrangement 1; 1' further comprises a tube holder part 33, which may be an integrated part in the container attaching part 23; 23' or as shown in the embodiments of Figures 2-5, a separate component that can be attached to the container attaching part 23; 23'. The tube holder part 33 is then provided in between the sensor housing 24 and the container attaching part 23; 23' and will be described in further details below. The hinge 27 can best be seen in Figures 3b and 5b where the sensor housing 24 is provided in an open position. In Figures 3a and 5a the sensor housing 24 is provided in the closed position. Another alternative is to connect the sensor housing 24 to the container attaching part 23; 23', possibly via a tube holder part 33, by magnets, possibly together with aligning pins for correct aligning. Also in an example with magnets the sensor housing can be provided in a closed position covering the top opening of the container and the sensor housing can be removed from the container attaching part, i.e. be provided in the open position where at least a part of the top opening 11; 11' of the container is revealed, enabling access for filling the container. When the sensor housing 24 is provided in the open position and the top opening 11; 11' of the container 13; 13' is at least partly revealed new liquid can be filled into the container.

As briefly discussed above the sensor housing 24 may in some embodiments comprise an angle sensor 25' whereby a tilt angle for the sensor housing 24 can be measured. The measured tilt angle can be used to indicate if the sensor housing 24 is in an open or closed position, i.e. it can be used as position indicating device 25 to detect if the radar sensor 21 is in operating position or not. It can also be used to identify if the container 13; 13' with a sensor arrangement 1; 1' attached is tilted. If the container is tilted the measurements by the radar sensor 21 may be disturbed because a measuring passage between the radar sensor and the liquid surface may not be free. Therefore, it may be suitable to warn the user if it is detected that the container possibly is tilted. The sensor housing 24 according to some embodiments of the invention comprises a hinge 27 as described above. This hinge 27 can be provided as an extending part of the sensor housing 24 whereby, if the sensor housing 24 would be detached from the container attaching part 23; 23' and positioned for example on a bench or table beside the container it will not lie flat because of the extending hinge 27 whereby the angle sensor 25' will indicate a tilt angle of the sensor housing 24, i.e. not an operating position for the radar sensor 21. This may be advantageous to avoid wrong liquid level measuring. Different tilt angle ranges can be prestored for different common identified situations, such as a container which is tilted by mistake, a container which is tilted by purpose for enabling use of the last liquid in the container, a removed sensor housing lying on the bench as discussed above, an open position of the sensor housing and a closed position of the sensor housing, i.e. an operating position for the radar sensor. Hereby the angle sensor 25' can be used for identifying different situations whereby liquid level measuring can be made more reliable. The angle sensor 25' can in some embodiments measure and differentiate between tilting along different axes, such as both x and y-axes. Hereby, it may be easier to differentiate between the different possible situations such as between the position of the sensor housing and tilting of the whole container. Tilting of the whole container may possibly often comprise tilting around more than one axis. The angle sensor 25' can be connected to a processor 31 in the sensor housing 24 and/or to a control system 111 in the separation system 101. Another alternative for a position indicating device 25 can be a sensor provided in either the container attaching part 23; 23' or in the sensor housing 24 which sensor can detect the close presence of the other of the two parts, for example mechanically, magnetically or optically.

As briefly discussed above the sensor arrangement 1; 1' may in some embodiments (and as shown in both embodiments of Figures 2-5) comprise a tube holder part 33. The tube holder part 33 may be a separate part or an integrated part of the container attaching part 23; 23'. The tube holder part 33 may in some embodiments be a detachable part which can be attached and detached from the container attaching part 23; 23'. The tube holder part 33 is configured for holding tubes 41 to be provided into the container 13; 13' towards one side of the top opening 11; 11'. Hereby the radar sensor 21 will have a free measuring passage, without tubes 41 in the way, between the radar sensor 21, when provided in the operating position, and a liquid surface in the container 13; 13' when the sensor arrangement 1; 1' is attached to the container.

In these embodiments the tube holder part 33 comprises a rail 34 which extends from the top opening 11; 11' of the container 13; 13' both into the container and out from the container when the sensor arrangement 1; 1' is provided to the container. The rail 34 can support one or more tubes 41 which are provided to the container. The rail 34 can suitably be reaching for example at least 5 or at least 6 cm from the top opening 11; 11' towards a bottom 42 of the container 13; 13'. The rail 34 is in some embodiments curved such that tubes 41 provided to the tube holder part 33 are guided away from the measuring passage between the radar sensor and the liquid surface. The rail 34 can suitably have a length such that when attached to the container 13; 13' it will reach down towards the bottom 42 of the container at least a distance such that it passes a neck of a container having a neck, such as a bottle. Hereby tubes 41 which are held by the rail 34 will be pushed out from the measuring passage and will not be flexed back into the measuring passage which could be the case if the rail 34 is curved and made too short, not reaching down to pass a neck of the container. Suitably the sensor arrangement 1; 1' can be designed to fit different sizes of containers and hereby a length of the rail 34 measured from the top opening of the container towards a bottom of the container when the sensor arrangement is attached to the container can be for example at least 5 cm or at least 6 cm in one embodiment of the invention and at least 8 cm in other embodiments of the invention.

In the embodiments shown in Figures 2-5 the tube holder part 33 further comprises a ring-shaped securing part 35 connected to the rail 34, wherein said ring-shaped securing part is provided in between the container attaching part 23; 23' and the housing part 24. However another design for attaching the rail 34 in the sensor arrangement 1; 1' would be possible. For example the rail 34 can be an integrated part of the container attaching part 23; 23'. The ring-shaped securing part 35 may be connected to the container attaching part 23; 23' such that it can rotate in relation to the container attaching part 23; 23' and connected to the housing part 24 such that the housing part 24 can be provided in at least two different positions in relation to the container attaching part 23; 23', wherein said two positions comprise the open position and the closed position. The ring-shaped securing part 35 is ring-shaped, i.e. comprises an open center, in order to allow access to the top opening 11; 11' for filling of the container 13; 13' when the housing part 24 is provided in the open position. The ring-shaped securing part 35 may be connected to the container attaching part 23; 23' such that it can rotate in relation to the container attaching part and hereby also the housing part 24 will rotate in relation to the container attaching part 23; 23'. This is suitable when the position of the rail 34 and hereby the position of tubes 41 provided into the container 13; 13' needs to be adjusted. A locking part 52 can be provided for locking the connection between the ring-shaped securing part 35 and the container attaching part 23; 23'. The housing part 24 comprises a recess 51 for receiving the rail 34. The housing part 24 and the tube holder part 33 can be removed from the container attaching part 23; 23' together with the tubes 41 while the container attaching part 23; 23' is kept in place connected to the container 13; 13'. Herbey tubes can be changed conveniently. The connection between the ring-shaped securing part 35 of the tube holder part 33 and the sensor housing 24 can be a hinge 27 or a magnetic connection as discussed above. Hereby the tubes 41 provided in the tube holder part 33 can be kept in position in the container during a filling of the container with new liquid. Hereby a process can be continued to run during filling of new liquid into the container 13; 13'. There may also be an additional snap connection 53 which can be used to secure a closed position of the housing part 24. In Figure 3b the snap connection 53 can be seen as two small extending parts on the sensor housing 24. These extending parts 53 will snap into recesses or openings in the tube holder part 33. The snap connection 53 can possibly also be used as an alternative for the position indicating device 25 for detecting a closed position of the housing part 24 and hereby that the radar sensor 21 is in the operating position. This can be detected by a sensor connected to the snap connection 53. The rail 34 is configured to hold the tubes 41 such that they are kept in substantially the same position within the container during different processes and for different volumes of content in the container, i.e. such that they are kept at a same level inside the container, often close to a bottom 42 of the container, which is suitable for preventing the tubes from being positioned above a liquid surface in the container.

In some embodiments the sensor arrangement comprises a processor 31 connected to the radar sensor 21, wherein said processor 31 is configured to determine amount of liquid in said container 13; 13' based on said detected position of the liquid surface and based on prestored container geometry information. By distributing intelligence out to the sensor arrangement, the communication out from the sensor arrangement to an external control system is less complicated and more robust, i.e. requires less capacity and smaller and cheaper cables can be used for that communication.

Suitably said sensor arrangement 1; 1' further comprises a connection device 51, whereby the radar sensor 21, the processor 31 and the angle sensor 25' can be connected to a control system 111 in the bench top fluid handling system 101 in which said container 13; 13' and sensor arrangement 1; 1' are used. Said connection device 51 can be connected by wire or wirelessly to the control system 111.

The sensor arrangement 1; 1' according to the invention is suitably configured to be attached to a container 13; 13' having a height between 10-100 cm and/or a volume between 0,5-220 liter or 0,5-20 liter. Hereby it can be used in for example a chromatography system or another bench top fluid handling system.

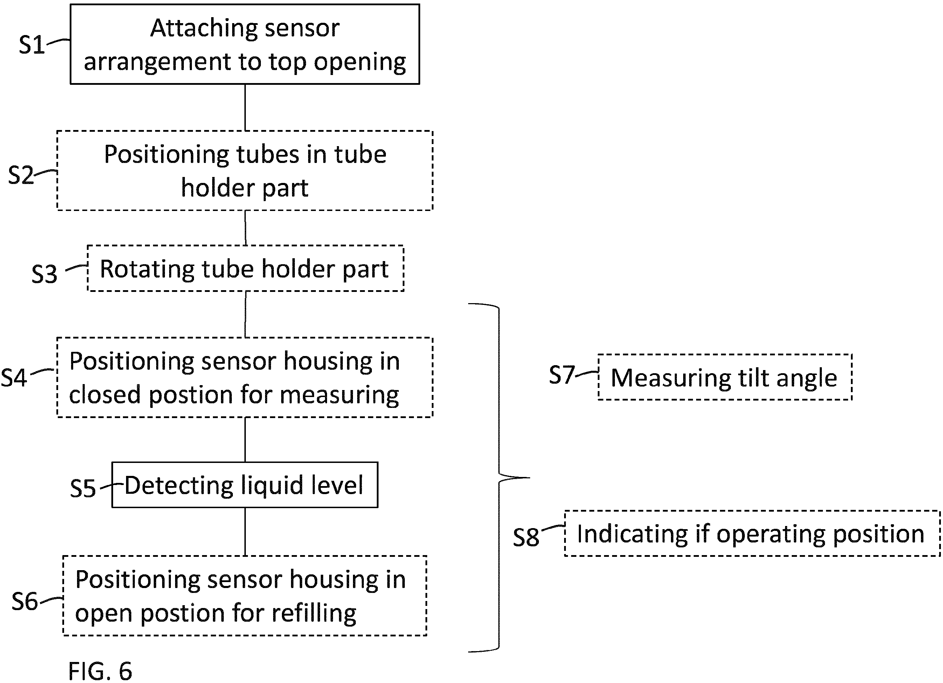

According to the invention a method for detecting a position of a liquid surface in a container 13; 13' used for storing liquid in a bench top fluid handling system 101 is also provided. The method is illustrated in the flow chart of Figure 6. The method steps are briefly described in order below with reference to Figure 6.

S1: Attaching a container attaching part 23; 23' of a sensor arrangement 1; 1' as defined above according to the invention to a top opening 11; 11' of the container 13; 13'.

S2: Positioning one or more tubes 41 to be provided into the container 13; 13' into a tube holder part 33 of the sensor arrangement 1; 1' if the sensor arrangement 1; 1' comprises such a tube holder part 33. This is hereby an optional step.

S3: Rotating the tube holder part 33 in relation to the container attaching part 23; 23' such that tubes 41 provided in the tube holder part 33 are directed for convenient connection in the bench top fluid handling system 101. This is hereby an optional step only performed if the sensor arrangement 1; 1' comprises a tube holder part 33 which is connected in the sensor arrangement 1; 1' such that it can rotate.

In some embodiments of the invention the sensor housing 24 can be provided in at least two different positions in relation to the container attaching part 23; 23' as discussed above. In these embodiments the method comprises the steps S4 and S6 below.

S4: Positioning the sensor housing 24 of the sensor arrangement 1; 1' in a closed position in relation to the container attaching part 23; 23' for measuring a liquid level in the container 13; 13'. Said closed position is a position where the sensor housing 24 covers at least a part of the top opening 11; 11' of the container 13; 13', wherein the radar sensor 21 is provided in the operating position when the sensor housing 24 is provided in the closed position.

S5: Detecting the position of the liquid surface in the container 13; 13' if the radar sensor 21 is in the operating position.

S6: Positioning the sensor housing 24 of the sensor arrangement 1; 1' in an open position in relation to the container attaching part 23; 23' for refilling liquid into the container 13; 13', wherein the open position is a position in which the sensor housing 24 is not covering the top opening 11; 11'.

The method further comprises the optional steps of:
S7: Measuring a tilt angle of the sensor housing 24 by an angle sensor 25' provided in the sensor housing 24. Said tilt angle can be used both for indicating if the sensor housing 24 is in closed or open position and for indicating if the container is tilted which may be problematic. A warning may be presented to a user that the container may be tilted.
S8: Indicating if the radar sensor 21 is in the operating position by a position indicating device 25. The position indicating device 25 can in some embodiments be the angle sensor 25' as discussed above.

A measured tilt angle for the sensor housing 24 can be used for detecting both a tilt of the whole container 13; 13' and a flip of the sensor housing 24, i.e. if the sensor housing 24 is in the open or closed position, for example in order for filling the container with new liquid. Different ranges for tilt angles may be preset in the processor 31 in the sensor housing 24 or in the control system 111, such as for example one range within which the sensor housing 24 is detected as being in open position and one range within which the sensor housing 24 is detected as being in closed position. Another range for tilt angles can be set, which range of tilt angles may indicate that the whole container is inadvertently tilted. In such case the sensor measuring may be disturbed, and the user can be warned, for example by sound or a displayed message. If the whole container 13; 13' is tilted the liquid level detecting may not be exact or may not even work and the user can be asked to check if the container 13; 13' has been correctly positioned. The user can also be asked to check if the sensor housing 24 has been provided in correct closed position if the tilt angle is outside a predefined tilt angle range for a closed position. Another preset tilt angle range can possibly also be a range within which the most probable reason for tilting is that the user tries to use the last liquid in the container by tilting it. In that case the pumps can be allowed to run even if the radar sensor 21 is not able to measure the liquid level.

When the sensor housing 24 is detected as being in the open position, for example for refilling of new liquid into the container, pumps 113 in the system 101 are suitably allowed to proceed pumping liquid. During this time pump metric can be used for measuring liquid volume in the container, i.e. dead reckoning is used instead of radar sensor liquid level detecting during a period when the sensor housing 24 is in open position. As soon as the sensor housing 24 is flipped back into the closed position the radar sensor 21 will start measuring again and the position of the liquid surface in the container will be updated accordingly.

Materials used for the sensor arrangement 1; 1' need to be suitable for use with the chemicals used in the processes run in the system 101. Furthermore, the sensor housing 24 which is enclosing the radar sensor needs to be made from a material through which the radar sensor can transmit and receive electromagnetic waves. Suitable materials may comprise for example: PEEK (Polyether Ether Katone) or PPS (Polyphenylene Sulfide) or PP (PolyPropylene).

## Claims

1. A sensor arrangement (1; 1') configured to be attached to a top opening (11; 11') of a container (13; 13') used for storing liquid in a bench top fluid handling system (101), said sensor arrangement (1; 1') comprising:
- a mmWave radar sensor (21);
- a sensor housing (24) comprising said mmWave radar sensor (21); and
- a container attaching part (23; 23') connected to said sensor housing (24) and configured for attaching the sensor arrangement (1; 1') to the top opening (11; 11') of the container (13; 13') such that the mmWave radar sensor (21) can be provided in an operating position for detecting a position of a liquid surface in the container (13; 13').

2. Sensor arrangement (1; 1') according to claim 1, wherein said sensor housing (24) can be provided in at least two different positions in relation to the container attaching part (23; 23'), wherein one of the positions is a closed position where the sensor housing (24) covers at least a part of the top opening (11; 11') of the container (13; 13') and another position is an open position in which the sensor housing (24) is not covering the top opening (11; 11'), wherein the mmWave radar sensor (21) is provided in the operating position when the sensor housing (24) is provided in the closed position.

3. Sensor arrangement (1; 1') according to claim 2, wherein said sensor housing (24) is connected in the sensor arrangement (1; 1') by a hinge (27), whereby the sensor housing (24) can be flipped up from the closed position to the open position for enabling access to the top opening (11; 11') of the container (13; 13').

4. Sensor arrangement (1; 1') according to claim 2 or 3, wherein the sensor housing (24) comprises an angle sensor (25').

5. Sensor arrangement (1; 1') according to any one of the preceding claims, further comprising a position indicating device (25) configured to indicate if the mmWave radar sensor (21) is in the operating position.

6. Sensor arrangement (1; 1') according to any one of the preceding claims, further comprising a tube holder part (33) which can be attached to the container attaching part (23; 23') and is configured for holding tubes (41) to be provided into the container (13; 13') towards one side of the top opening (11; 11').

7. Sensor arrangement (1; 1') according to claim 6, wherein the tube holder part (33) comprises a rail (34) which extends from the top opening (11; 11') of the container (13; 13') both into the container and out from the container when the sensor arrangement (1; 1') is provided to the container, said rail (34) can support one or more tubes (41) which are provided to the container.

8. Sensor arrangement (1; 1') according to claim 7 and claim 2, wherein the tube holder part (33) further comprises a ring-shaped securing part (35) connected to the rail (34), wherein said ring-shaped securing part is provided in between the container attaching part (23; 23') and the sensor housing (24) when the sensor housing is provided in the closed position, whereby the ring-shaped securing part (35) is connected to the container attaching part (23; 23') such that it can rotate in relation to the container attaching part (23; 23') and connected to the sensor housing (24) such that the housing part (24) can be provided in at least two different positions in relation to the container attaching part (23; 23'), wherein said two positions comprise the open position and the closed position.

9. Sensor arrangement (1; 1') according to any one of the preceding claims, wherein said sensor arrangement comprises a processor (31) connected to the radar sensor (21), wherein said processor (31) is configured to determine amount of liquid in said container (13; 13') based on said detected position of the liquid surface and based on prestored container geometry information.

10. Sensor arrangement (1; 1') according to any one of the preceding claims, wherein said container attaching part (23; 23') comprises threads for threaded connection to a top opening (11) comprising threads of a container (13) or comprises magnets for magnetic connection to a top opening (11') of a container (13').

11. Sensor arrangement (1; 1') according to any one of the preceding claims, further comprising a connection device (51), whereby the radar sensor (21) and possibly a processor (31) and/or an angle sensor (25) can be connected to a control system (111) in the bench top fluid handling system (101) in which said container (13; 13') and sensor arrangement (1; 1') are used.

12. Sensor arrangement (1; 1') according to any one of the preceding claims, wherein said sensor arrangement is configured to be attached to a container (13; 13') having a height between 10-100 cm and/or a volume between 0,5-20 liter.

13. A method for detecting a position of a liquid surface in a container (13; 13') used for storing liquid in a bench top fluid handling system (101), said method comprising the steps of:
- attaching (S1) a container attaching part (23; 23') of a sensor arrangement (1; 1') according to any one of the preceding claims to a top opening (11; 11') of the container (13; 13');
- detecting (S5) the position of the liquid surface in the container (13; 13') when the mmWave radar sensor (21) is in the operating position.

14. Method according to claim 13, further comprising the step of:
- positioning (S2) one or more tubes (41) to be provided into the container (13; 13') into a tube holder part (33) of the sensor arrangement (1; 1').

15. Method according to claim 14, further comprising the step of:
- rotating (S3) the tube holder part (33) in relation to the container attaching part (23; 23') such that tubes (41) provided in the tube holder part (33) are directed for convenient connection in the bench top fluid handling system (101).

16. Method according to any one of the claims 13-15, further comprising the step of:
- indicating (S8) if the radar sensor (21) is in the operating position by a position indicating device (25).

17. Method according to claim 16, wherein the step of indicating (S8) if the radar sensor (21) is in the operating position by the position indicating device (25) comprises measuring a tilt angle of the sensor housing (24), wherein said position indicating device (25) comprises an angle sensor (25') provided in the sensor housing (24).

18. Method according to any one of the claims 13-17, further comprising the steps of:
- positioning (S4) a sensor housing (24) of the sensor arrangement (1; 1') in a closed position in relation to the container attaching part (23; 23') for detecting a liquid level in the container (13; 13'), wherein said closed position is a position where the sensor housing (24) covers at least a part of the top opening (11; 11') of the container (13; 13'), wherein the radar sensor (21) is provided in the operating position when the sensor housing (24) is provided in the closed position;
- positioning (S6) the sensor housing (24) of the sensor arrangement (1; 1') in an open position in relation to the container attaching part (23; 23') for refilling liquid into the container (13; 13'), wherein the open position is a position in which the sensor housing (24) is not covering the top opening (11; 11').
